# EUROPEAN PATENT APPLICATION

(11) **EP 2 236 905 A1**
(43) Date of publication of application: **06.10.2010**
(21) Application number: 09275021.5
(22) Date of filing: 03.04.2009
(51) Int. Cl.: F17C 13/04

(54) **Re-fillable apparatus for storage of compressed gas**

(71) Applicant: Tru-Air Limited, 13 Melville Street Edinburgh EH3 7PE (GB)
(72) Inventor: Camilleri, Richard Lucien, Edinburgh EH3 7PE (GB)
(74) Representative: Marles, Alan David

(57) **Abstract**

There is provided re-fillable apparatus (10) for storage of compressed gas. The apparatus comprises a reservoir (16) which can be filled through a one-way filling valve, a choke (20), a regulator which communicates with the choke and which controls flow of gas from the choke to a regulator chamber (33) and a delivery valve for delivering compressed gas to an end use device.

## Description

This invention relates to re-fillable apparatus for storage of a compressed gas.

It is known to provide a cartridge in which is contained a quantity of liquid-phased CO₂ to be used as an energy source. When such cartridges are brought into use, an end wall is ruptured and the resulting drop in pressure allows some of the CO₂ to vaporise and to leave the cartridge in the gas phase. The gas, being under pressure, can then be used to perform useful work in a number of known devices. When all of the CO₂ has been used, the cartridge can be thrown away. A common use of these cartridges is in providing propellant gas in an air pistol or an air rifle. However, the cartridges can be used as a source of energy in other applications where gas under pressure is a suitable source of energy.

CO₂ has been particularly advantageous in these cartridges because it can be liquefied at comparatively low pressure at normal room temperature. This allows the cartridge to be made using basic construction techniques, thereby keeping its cost low enough to enable it to be sold as a disposable item. That the CO₂ goes through a phase change as it leaves the cartridge is advantageous because, for a given pressure, it allows more energy to be stored in the cartridge than would be the case if it were in its gas phase at all times. Thus, if such cartridges were filled, for example, with nitrogen, the amount of energy stored in it would be considerably less. Also, some applications required the pressure of the gas provided to be as near as constant as possible. The phase transition achieved this. In contrast, if the content of the cartridge were in gas phase, the pressure would decrease steadily as the quantity of gas in the cartridge decreases.

These disposable cartridges are not without their disadvantages. Although they can be obtained at low cost, the cost is not negligible. For instance, a keen sports air pistol shooter may use several such cartridges in a session, so the cost is multiplied accordingly. Moreover, if many of these cartridges are in simultaneous use in an enclosed space, such as in a shooting gallery or closed equipment room, the amount of released CO₂ can be so large as to rise to an unacceptable concentration in the atmosphere within the space.

Therefore, there are clear advantages in producing a cartridge to provide a source of energy in the form of compressed gas, that can be used multiple times and that can use a gas that does not cause problems if its concentration increases. In many applications, a cartridge embodying the present invention could be used as a direct replacement for a disposable CO₂ cartridge.

According to the present invention there is provided re-fillable apparatus for storage of compressed gas comprising a reservoir within which gas can be stored under pressure, a filling valve through which gas can be charged into the reservoir and an outlet valve assembly through which gas can be released from the reservoir, the outlet valve assembly comprising:
a choke which communicates with the reservoir;
a regulator which communicates with the choke and which controls flow of gas from the choke to a regulator chamber; and
a delivery valve operative to deliver compressed gas to a device to which the apparatus is in use connected.

Compressed gas stored within such a cartridge can be used as an energy source for a wide variety of purposes. For example, such a cartridge can be configured to provide a direct replacement for a disposable cartridge, with automatic opening of the valve assembly simulating rupture of the disposable cartridge.

In some preferred embodiments, the delivery valve is slidably and sealingly mounted in a forward bore in the forward housing and comprises a spool having an axial bore which is closed at its upstream end and which communicates by means of cross bores with an annular space between the spool and the forward bore, the annular space selectively being open or closed relative to the regulator chamber depending on the condition of the valve. In one arrangement, the annular space is closed by virtue of an annular seal at the closed end of the spool engaging an annular shoulder provided on the inside of the forward housing. Conveniently, the apparatus is in the form of a refillable cartridge.

Preferred features are set out in the attached sub-claims.

Embodiments of the invention will now be described in detail, by way of example. The description makes reference to the accompanying drawings, in which:

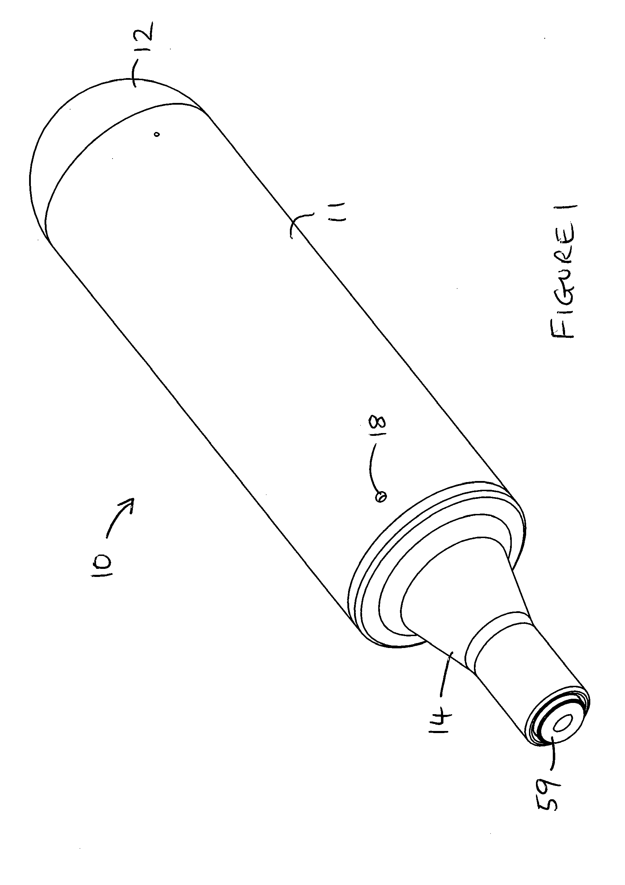

Figure 1 is a perspective view of a refillable apparatus according to the present invention,
Figure 2 is a lengthways section through the figure 1 apparatus in an empty state,
Figure 3 is a lengthways section through the figure 1 apparatus after filling,
Figure 4 is a lengthways section through the figure 1 apparatus attached to an end-use device (not shown),
Figure 5 is a lengthways section through the figure 1 apparatus as attached to an end-use device (not shown), and with its regulator valve in its rearward, closed position,

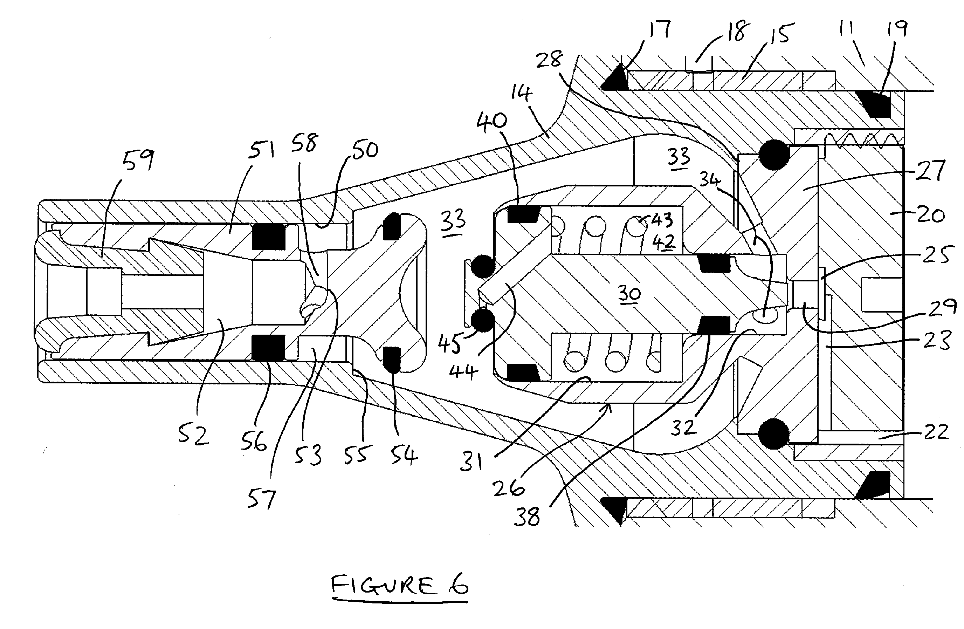

Figure 6 is a close-up view of part of the apparatus shown in figure 4,
Figure 7 is a close-up view of a needle valve used in the apparatus,
   and
Figure 8 is a perspective view of a choke block used in the apparatus.

In the drawings there is shown a refillable apparatus in the form of a cartridge 10. In this embodiment the cartridge is intended to be a direct replacement for an existing, disposable CO₂ cartridge used in air pistols. The exterior of the cartridge is generally rotationally symmetrical about its central lengthwise axis.

As shown in the drawings, the cartridge 10 has a generally cylindrical body 11 to which an end cap 12 is threadedly attached at the upstream end of the cartridge 10. An O-ring seal 13 is incorporated to seal the end cap against any leaks. It is of course possible that the body 11 and end cap 12 could be formed as a single part or even from more than two parts. At its downstream end, the cylindrical body 11 is threadedly attached at 15 to a forward housing 14 thereby defining a chamber or reservoir 16 for storing compressed gas under pressure. A second O-ring 17 seals the body 11 with respect to the forward housing 14.

A small bore 18 is provided in the wall of the body 11 at the threaded connection 15. There is also an axially extending flat (not shown) in the threaded connection and a third O-ring 19 is provided at the upstream end of the forward housing. This O-ring 19 is formed and located so as to be a one-way seal such that when the bore 18 is attached to an external source of compressed gas or a pump, compressed gas can pass the O-ring 19 and charge the reservoir 16. However, once the source of compressed gas or pump is removed from the bore 18, the O-ring 19 re-seals with the body 11 and prevents a return flow of the compressed gas in the reservoir 16 back out via the bore 18. This combination of features constitutes a filling valve assembly for the cartridge 10 but it will be appreciated that other filling valve assemblies would be possible and they could be provided at other locations relative to the reservoir 16.

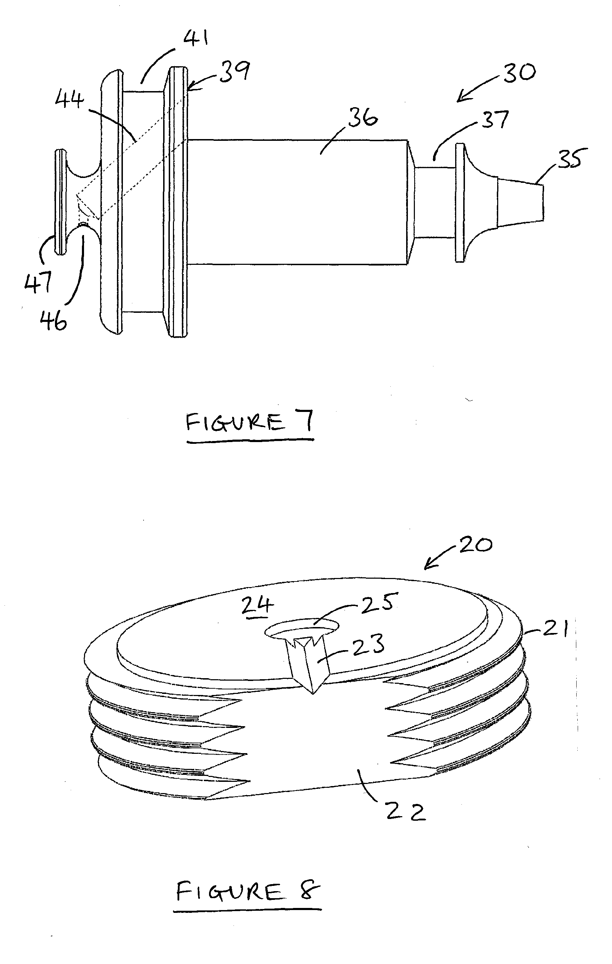

At the upstream end of the forward housing 14, a choke block 20 is provided. The choke block 20 has the form of a plug which is threadedly attached to the forward housing 14. The choke block 20 is shown in greater detail in figure 8. The block 20 has an external screw thread 21 and this thread is provided with a flat 22. The flat communicates with a groove 23 in the downstream, radially extending face 24 of the choke block. The groove 23 extends radially to the centre of the face 24 where it meets a central circular recess 25.

The purpose of the choke block 20 is to restrict the flow of gas from the reservoir and the amount of restriction will depend on the desired end-use pressure. The choke block can be varied depending on the amount of restriction required. For example more flats could be provided and/or more grooves could be provided and/or the groove depth/cross-section could be varied.

Also provided at the upstream end of the forward housing 14, but downstream of the choke block 20, is a regulator housing 26. The regulator housing 26 has an upstream end 27 which is held against an annular shoulder 28 by the threaded connection of the choke block 20 in the forward housing 14. An O-ring provided on the regulator housing 26 seals the external periphery of the upstream end 27 of the regulator housing. The end 27 of the regulator housing also has an axial through bore 29 which opens to the recess 25 of the choke block 20 and which provides a seat for a needle valve 30 which will be described shortly.

The regulator housing 26 extends in a downstream direction and provides a first cylindrical bore 31 and a second, narrower cylindrical bore 32 upstream thereof. Around the outside of the regulator housing 26 between the forward housing 14 and the regulator housing 26, and downstream of the regulator housing is a regulator chamber 33. The upstream end of the regulator chamber 33 communicates with the upstream end of the second cylindrical bore 32 via a number of cross-bores 34. There are three such cross-bores 34 in the illustrated device but the number could be more or less. Ideally the cross-sectional area of the through bore 29 is less than the combined cross-sectional area of the cross-bores 34 in order not to further restrict flow of gas.

Inside the regulator housing 26 is provided the needle valve 30. The needle valve 30 has an upstream needle portion 35 which projects from a main shaft 36 in an upstream direction. The needle portion 35 is intended to cooperate with the valve seat provided by the through bore 29 thereby to selectively open/close the regulator chamber 33 to the compressed gas in the reservoir 16. The main shaft 36 of the needle valve 30 has, in an annular recess 37, an annular seal 38 for sealing engagement with the second bore 32. At its downstream end the needle valve 30 has an enlarged cylindrical portion 39 in which there is another annular seal 40 provided in a second annular recess 41 for sealing engagement with the first bore 31 of the regulator housing 26. the needle valve 30 is therefore slidably received in the regulator housing 26 to open and close the through bore 29.

Between the first bore 31 and the main shaft 36 of the needle valve is defined a chamber 42 in which is disposed a spring 43 which acts to urge the needle valve in a downstream direction such that the needle portion 35 and the through bore 29 are in an open condition. When the gas pressure in the regulator chamber 33 is sufficient to overcome the force of the spring then the needle valve is moved upstream and the needle portion 35 closes the through bore 29 to prevent further flow of gas into the regulator chamber 33.

In the figures the spring 43 is shown as a coil spring but other types of spring or other urging means are envisaged. One alternative to a coil spring would be a tubular polymer spring such as a closed cell urethane element.

The spring chamber 42 communicates with the regulator chamber 33 via an angled vent bore 44, the downstream end of which is sealed by means of a vent O-ring 45 seated in an annular groove 46 in a downstream projection 47 of the needle valve 30. Pressure build up in the spring chamber can be vented when such pressure is greater than the pressure in the regulator chamber. This will be explained in more detail later.

At the downstream end of the regulator chamber is a cylindrical outlet bore 50 in which is slidably disposed a delivery valve which is in the form of a spool 51 having a central bore 52 which is closed at its upstream end 53. The upstream end has an O-ring 54 which is able to seal against an annular shoulder 55 at the upstream end of the outlet bore 50. Downstream the spool 51 is provided with an additional O-ring 56 which seals against the outlet bore 50. Between the O-rings 54 and 56 is an annular recess 57 in the spool and this recess 57 communicates with the central bore 52 by means of one or more cross-bores 58. The downstream end of the central bore 52 has a rubber or synthetic rubber adaptor 59 for engaging an end use device, such as an air pistol, to which the cartridge is to be connected.

Most of the components of the above-described cartridge are made from metal such as stainless steel except for the adaptor 59, the O-rings and perhaps the spring 43. In some cases the metal could be replaced by other materials such as plastics provided of course that the material is strong enough to handle the high pressures and forces associated with the cartridge.

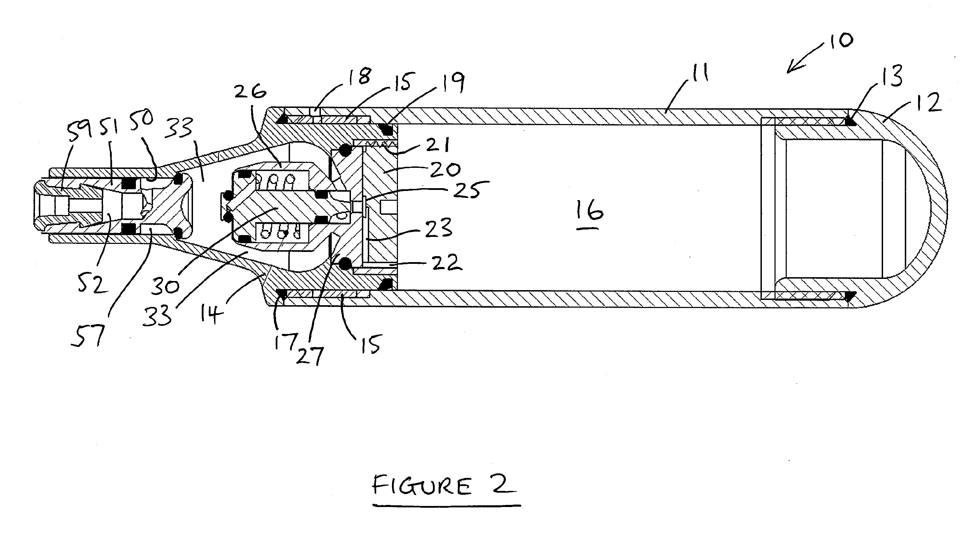

The operation of the device will be described below, with particular reference to figures 2 to 5.

Starting at figure 2, the cartridge is shown in its empty state. The main delivery valve is closed with the O-ring 54 abutting and sealing against the shoulder 55. The regulator is open with the spring 43 urging the needle valve 30 in a downstream direction with the through bore 29 open. An external supply (not shown) of pressurised gas, such as air, is connected to the small bore 18. The external supply could be a bottle of compressed gas such as air or the small bore 18 could be connected to a suitable pump, such as a stirrup pump, depending on the pressures required in the reservoir 16. The external supply of gas under pressure reaches the O-ring 19 via the axially extending flat in the thread and forces its way past the O-ring 19 which operates as a one-way, non-return valve. The reservoir 16 is charged in this way until the desired pressure is achieved in the reservoir.

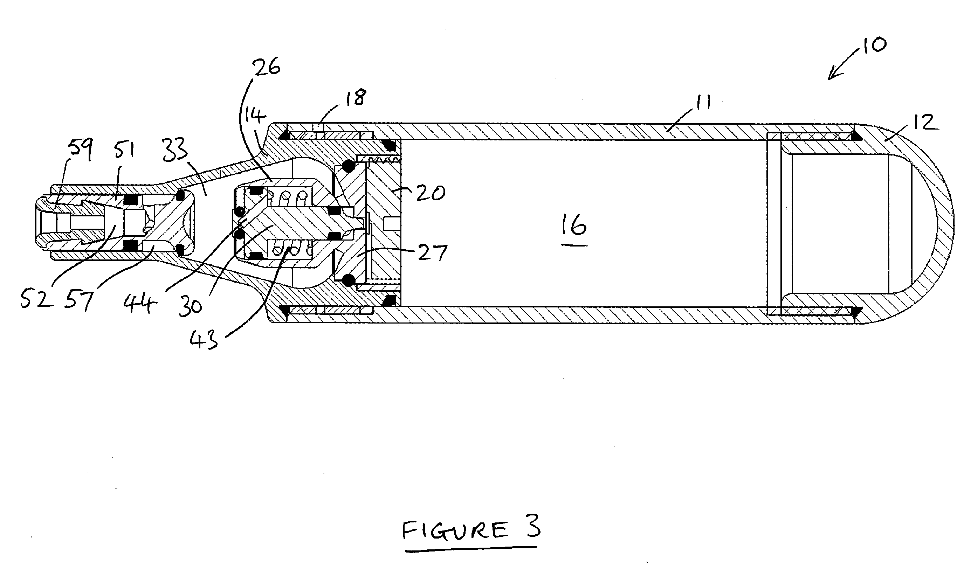

As the reservoir is being charged, gas is able to flow through the choke block 20, by virtue of the flat 22, groove 23 and recess 25, to the through bore 29. Because the needle valve 30 is initially open by virtue of the force of the spring 43 the gas passes through the cross-bores 34 and into the regulator chamber 33. As the pressure in the regulator chamber 33 increases, it reaches a level where it overcomes the force of the spring 53 and moves the needle valve 30 upstream, against the force of the spring, such that the needle portion 35 engages the valve seat provided by the through bore 29. This closes the through bore 29 and prevents further charging of the regulator chamber 33. This condition of the cartridge is shown in figure 3.

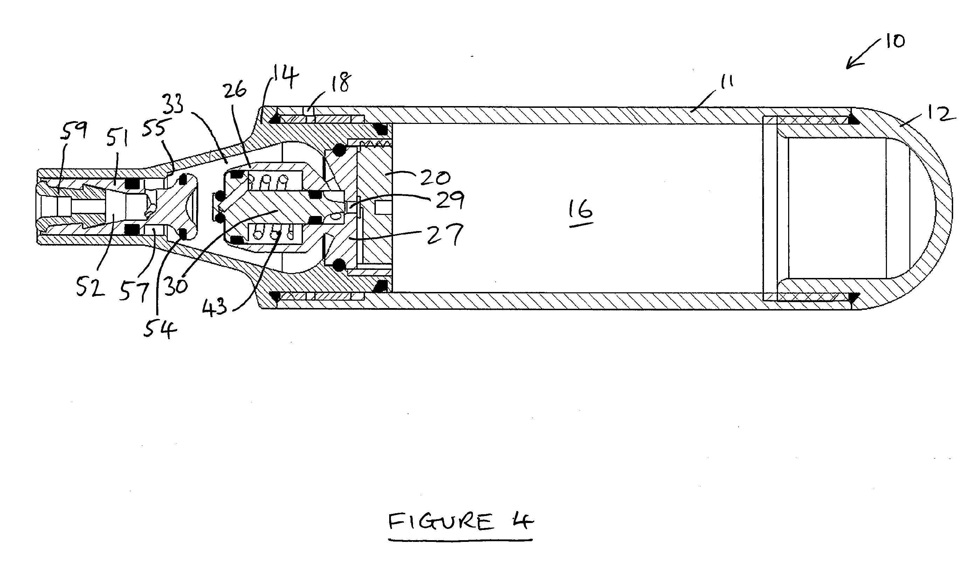

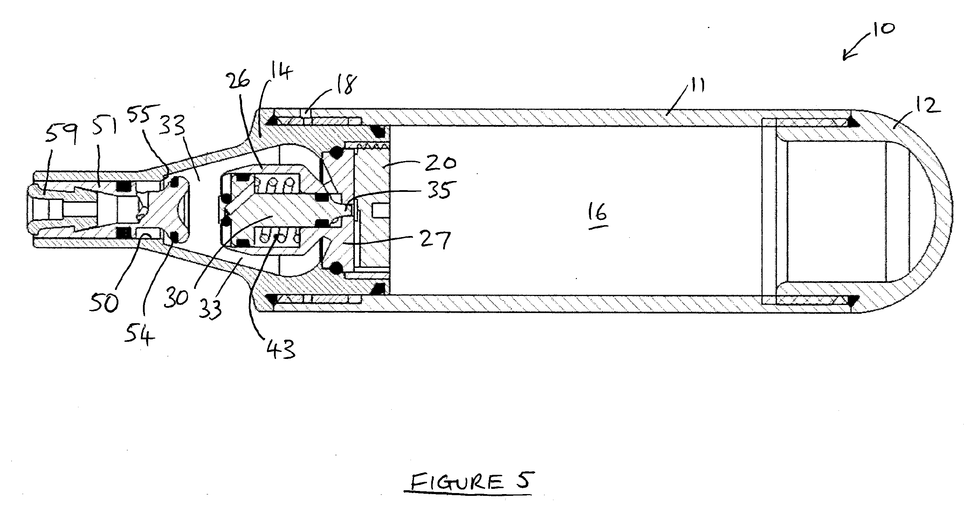

The reservoir 16 is now charged with gas at an elevated pressure and the cartridge can now be put to its end use, the elevated pressure in the reservoir being well in excess of the correct working pressure required in the end use. Using the example of an air pistol, the cartridge 10 is inserted into the pistol in the same way as the traditional, disposable liquid CO₂ cartridge. Instead of breaking a seal, the construction of the pistol is such that the adaptor 59 forms a seal around its host device (not shown) and the spool 51 is pushed upstream as shown in figure 4. The compressed gas in the regulator chamber 33 now flows into the device, the pistol in this example, causing the pressure in the regulator chamber to drop. The force of the spring 43 then causes the needle valve to move downstream thus opening the regulator to allow gas from the reservoir to charge the regulator chamber 33 again until the predetermined pressure is reached such that the regulator closes again. This condition is shown in figure 5.

When the pistol is fired (or whatever device uses the compressed gas), the gas pressure in the regulator chamber drops and the spring 43 causes the regulator to open thereby allowing pressurised gas to flow into the regulator chamber 33 until there is sufficient pressure in the regulator chamber 33 to close the regulator. This process can be repeated until the pressure in the reservoir 16 is insufficient to charge the regulator chamber to the desired predetermined pressure. The cartridge 10 can then be removed and re-charged using the source of pressurised gas or the pump etc.

The vent bore 44 leading from the spring chamber 42 to the regulator chamber 33 via the non-return O-ring 45 enables the spring chamber to vent to the regulator chamber in the event of any leakage of compressed gas into the spring chamber 42 past either or both of the seals 38, 40. If this pressure remained in the spring chamber 42 then it would act as a gas spring supplementing the spring 43 and causing the regulator to operate at an incorrect pressure or fail to close at all. It will be appreciated that the spring chamber 42 will vent in this way when the regulator chamber pressure drops momentarily following discharge via the delivery valve.

The reservoir can contain a volume of gas under pressure, being charged through the filling bore assembly and discharged through the delivery valve 14. In this air pistol embodiment, the working pressure of the gas within the chamber may be 250 bar (25 MPa), and the cartridge is constructed so as to withstand such pressure. An air pistol requires a supply of gas at approximately 60 bar (6 MPa) but other applications will require different reservoir and delivery pressures.

Although the embodiments described above relate to a source of energy for use in an air pistol, embodiments of the invention have many different potential applications where a re-chargeable source of energy is required. Moreover, embodiments can be used with gasses other than air, including inert gasses such as nitrogen, fuel gasses such as hydrogen, and so forth. For example, such applications may include, but are not limited to:
- breathing apparatus,
- inflating articles,
- powering actuators in machinery, such as vending machinery;
- use in "cordless" pneumatic power tools
- as an air battery, being a power supply with multiple applications;
- fire extinguishers;
- drug delivery; and
- providing a source of gas to maintain engine turbochargers in motion to reduce turbo lag.

Naturally, the pressure and volume of each embodiment will be selected as appropriate to the application, as will the gas that is stored within the cartridge for use. The body component can simply be scaled and shaped to provide the storage volume required for a particular embodiment.

Also, although the description relates to a refillable cartridge it will be appreciated that the component parts of the cartridge could be built-in to a device intended to utilise a refillable source of energy.

## Claims

1. Re-fillable apparatus for storage of compressed gas comprising a reservoir within which gas can be stored under pressure, a filling valve through which gas can be charged into the reservoir and an outlet valve assembly through which gas can be released from the reservoir, the outlet valve assembly comprising:
a choke which communicates with the reservoir;
a regulator which communicates with the choke and which controls flow of gas from the choke to a regulator chamber; and
a delivery valve operative to deliver compressed gas to a device to which the apparatus is in use connected.

2. Apparatus as claimed in claim 1 wherein the regulator comprises a regulator valve which is urged into an open condition relative to the choke to receive gas therefrom and which is movable into a closed condition relative to the choke when the pressure of gas in the regulator chamber overcomes the force urging the regulator valve into its open condition.

3. Apparatus as claimed in claim 2 wherein the urging of the regulator valve into its open condition is effected by spring means.

4. Apparatus as claimed in claim 3 wherein the regulator comprises a housing surrounding a valve needle which is slidably mounted therein.

5. Apparatus as claimed in claim 4 wherein the valve needle has an enlarged downstream end slidably and sealingly mounted in a first bore in said regulator housing and a narrower upstream portion slidably and sealingly mounted in a second bore which extends from and is aligned with said first bore.

6. Apparatus as claimed in claim 5 wherein the spring means is disposed within said first bore in a spring chamber upstream of said enlarged end and downstream of said second bore.

7. Apparatus as claimed in claim 6 wherein the upstream end of the regulator housing has a central through bore which provides a valve seat for the upstream end of the valve needle, said central orifice communicating with the choke.

8. Apparatus as claimed in claim 6 or 7 wherein the spring chamber communicates with the regulator chamber via a one-way valve such that the spring chamber is able to vent into the regulator chamber.

9. Apparatus as claimed in any one of claims 1 to 8 wherein the apparatus further comprises a reservoir housing which is sealingly connected to a forward housing containing the outlet valve assembly, the choke comprising a choke block being mounted in the forward housing adjacent the reservoir such that there is a restricted passage from the reservoir to the downstream side of the choke block.

10. Apparatus as claimed in claim 9 wherein the choke block is threadedly mounted in the forward housing and the restricted passage comprises one or more flats in the screw-threaded connection.

11. Apparatus as claimed in claim 10 wherein the one or more flats communicate with one or more respective grooves in a radially extending downstream face of the choke block, said one or more grooves leading to a central axial recess which communicates with said central through bore of the regulator housing, said regulator housing having an upstream face which mates with the downstream face of the choke block.

12. Apparatus as claimed in any one of claims 5 to 11 wherein one or more cross-bores connect the regulator chamber to the inside of the second bore upstream of the seal with the valve needle.

13. Apparatus as claimed in claim 12 wherein the combined cross-sectional area of said one or more cross-bores is greater than the cross-sectional area of the central through bore in the regulator housing.

14. Apparatus as claimed in any one of claims 9 to 13 wherein the space between the inside of the forward housing and the regulator housing reduces in a downstream direction.

15. Apparatus as claimed in any one of claims 1 to 14 wherein the delivery valve has an open condition and a closed condition determined by the device to which it is connected in use.
